# EUROPÄISCHE PATENTSCHRIFT

(11) **EP 3 655 269 B1**
(45) Veröffentlichungstag und Bekanntmachung des Hinweises auf die Patenterteilung: **26.01.2022**
(21) Anmeldenummer: 18734757.0
(22) Anmeldetag: 12.06.2018
(51) Int. Cl.: B60H 1/00, H01M 10/625, H01M 10/613, H01M 10/663, B60L 50/50

(54) **ANLAGE ZUR TEMPERIERUNG EINES ENERGIESPEICHERS**
SYSTEM FOR CONTROLLING THE TEMPERATURE OF AN ENERGY STORE
INSTALLATION POUR LA THERMORÉGULATION D'UN ACCUMULATEUR D'ÉNERGIE

(30) Priorität: 21.07.2017 DE 102017212588
(43) Veröffentlichungstag der Anmeldung: 27.05.2020
(73) Patentinhaber: Mahle International GmbH, 70376 Stuttgart (DE)
(72) Erfinder: HIPP, Christoph, 70192 Stuttgart (DE); MUCKLE, Stefan, 71287 Weissach (DE); SCHAUER, Markus, 71672 Marbach (DE); SEHGAL, Deepak, 70437 Stuttgart (DE); ZIMMERMANN, Raphael, 70329 Stuttgart (DE)
(74) Vertreter: BRP Renaud & Partner mbB Rechtsanwälte Patentanwälte Steuerberater
(86) Internationale Anmeldenummer: PCT/EP2018/065446
(87) Internationale Veröffentlichungsnummer: WO 2019/015880

(56) Entgegenhaltungen:
- DE-A1- 4 319 293
- DE-A1- 19 625 927
- DE-A1-102009 008 608
- DE-C1- 4 415 129
- FR-A1- 2 975 230

## Beschreibung

Die Erfindung betrifft eine Anlage zur Temperierung eines Energiespeichers in einem Kraftfahrzeug gemäß dem Oberbegriff des Anspruchs 1. Die Erfindung betrifft auch ein Kraftfahrzeug mit der Anlage.

Anlagen zur Temperierung von Energiespeichern in einem Elektro- oder in einem Hybridkraftfahrzeug sind - beispielsweise aus DE 10 2016 108 486 A1 - bereits bekannt. Eine derartige Anlage weist dabei üblicherweise einen Kühlmittelkühler auf, der in einem Kühlmittelkreislauf mit dem Energiespeicher - beispielsweise einer Traktionsbatterie - wärmeübertragend verbunden ist. Der Energiespeicher gibt dabei die erzeugte Wärme an das Kühlmittel ab, das nachfolgend in dem Kühlmittelkühler gekühlt wird. Der Kühlmittelkühler kann dabei beispielsweise durch die Umgebungsluft durchströmt werden und das Kühlmittel dadurch gekühlt werden. Die DE 196 25 927 A1 zeigt eine kompakte Anordnung einer Klimaanlage. Die DE 10 2009 008608 A1 zeigt einen Flachrohrkondensator mit integriertem Sammlertrockner.

Um auch bei einer hohen Außentemperatur das Kühlmittel und folglich den Energiespeicher kühlen zu können, weist die Anlage üblicherweise auch einen Kältemittelkreislauf auf. Der Kältemittelkreislauf umfasst üblicherweise einen Kältemittelkompressor, einen Sammlertrockner und einen Flachrohrkondensator. Der Kältemittelkompressor verdichtet das Kältemittel, das nachfolgend in dem Flachrohrkondensator gekühlt und in dem Sammlertrockner von Restwasser befreit und gesammelt wird. Der Flachrohrkondensator wird dabei luftdurchströmend angeordnet und der Sammlertrockner wird üblicherweise vertikal betrieben, um eine möglichst hohe Effizienz zu erzielen.

Der Kältemittelkreislauf und der Kühlmittelkreislauf sind über einen Verdampfer bzw. Chiller - eine auf der Verdunstungskühlung basierte Kältemaschine - miteinander verbindbar, so dass das Kühlmittel in dem Verdampfer bzw. Chiller gekühlt werden kann. Bei einer hohen Außentemperatur kann also das Kühlmittel zusätzlich in dem Kältemittelkreislauf gekühlt und die in dem Energiespeicher erzeugte Wärme effektiv abgeleitet werden.

Üblicherweise unterliegen solche Anlagen räumlichen Einschränkungen und müssen möglichst kompakt und leicht sein.

Die Aufgabe der Erfindung ist es daher, für eine Anlage der gattungsgemäßen Art eine verbesserte oder zumindest alternative Ausführungsform anzugeben, um die Anlage kompakt und leicht auszugestalten.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Anlage zur Temperierung eines Energiespeichers in einem Kraftfahrzeug durch ein alternatives Anordnen der Bestandteile kompakter und leichter auszugestalten. Dabei ist der Energiespeicher in einen Kühlmittelkreislauf wärmeübertragend einbindbar und ein Kältemittelkreislauf umfasst einen Kältemittelkompressor und einen Flachrohrkondensator mit einem in dem Flachrohrkondensator festgelegten Sammlertrockner. In dem Kühlmittelkreislauf kann ein Kühlmittel und in dem Kältemittelkreislauf kann ein Kältemittel fließen. Der Kühlmittelkreislauf und der Kältemittelkreislauf sind durch einen Kältemittelverdampfer miteinander verbindbar, wobei in dem Kältemittelverdampfer die Wärme zwischen dem Kühlmittel und dem Kältemittel übertragbar ist. Die Anlage ist ferner in einem Gehäuse festgelegt. Erfindungsgemäß weisen eine luftdurchströmbare Großfläche des Flachrohrkondensators und der in dem Flachrohrkondensator festgelegte Sammlertrockner einen Betriebswinkel größer 5° und kleiner 90° zu einer Betriebshorizontalebene auf.

Im vorliegenden Zusammenhang wird unter dem Begriff "Energiespeicher" insbesondere eine Anordnung einer oder mehrerer galvanischer Zellen verstanden. Dabei kann es sich insbesondere um primäre oder um sekundäre Zellen handeln, wobei letztere auch als Akkumulator bezeichnet werden können. Sofern der Energiespeicher mehrere primäre oder sekundäre galvanische Zellen aufweist, kann er auch als Batterie bezeichnet werden.

Zur Temperierung ist der Energiespeicher in den Kühlmittelkreislauf wärmeübertragend einbindbar. Die in dem Energiespeicher erzeugte Wärme kann an das Kühlmittel abgegeben werden. Alternativ kann der Energiespeicher durch das heißere Kühlmittel bei einer niedrigen Außentemperatur auch geheizt werden. Die in dem Kühlmittel gespeicherte Wärme kann dann beispielsweise in einem in den Kühlmittelkreislauf eingebunden Kühlmittelkühler an die Umgebung abgegeben werden. Der Kühlmittelkühler kann in dem Gehäuse der Anlage beispielsweise an dem Flachrohrkondensator anliegend und luftdurchströmbar angeordnet oder jedoch extern verbaut sein. Alternativ kann das Kühlmittel die gespeicherte Wärme auch in dem Kältemittelverdampfer an das Kältemittel abgeben, ohne dass ein Kühlmittelkühler in dem Kühlmittelkreislauf vorgesehen ist.

Die Betriebshorizontalebene ist bei einem Betrieb der Anlage zu einem Boden horizontal ausgerichtet. Bei einer in einem Kraftfahrzeug eingebauten Anlage liegt die Betriebshorizontalebene in der Fahrzeug-X-Y-Ebene und kann beispielsweise einer Dachfläche oder jedoch einer Bodenfläche des Kraftfahrzeugs entsprechen. Der Sammlertrockner ist in dem Flachrohrkondensator üblicherweise achsparallel zu Sammelrohren des Flachrohrkondensators angeordnet. Der in dem Flachrohrkondensator festgelegte Sammlertrockner kann dabei parallel zu der Großfläche des Flachrohrkondensators angeordnet sein. Durch ein Zusammenlegen des Flachrohrkondensators und des Sammlertrockners kann das Eigengewicht der Anlage vorteilhaft reduziert werden. Der Betriebswinkel der Großfläche des Flachrohrkondensators entspricht dem Betriebswinkel des Sammlertrockners zu der Betriebshorizontalebene und liegt erfindungsgemäß zwischen 5° und 90°. Überraschenderweise ist der integrierte Sammlertrockner auch bei dem Betriebswinkel größer 5° und kleiner 90° funktionsfähig und effizient, so dass durch die erfindungsgemäße Lösung die Anlage kompakter aufgebaut und die Funktion des Sammlertrockners erhalten ist.

Der Betriebswinkel des Flachrohrkondensator mit dem integrierten Sammlertrockner zu der Betriebshorizontalebene kann in der erfindungsgemäßen Anlage vorteilhafterweise unterschiedlich sein, so dass der gleich ausgestaltete Flachrohrkondensator mit dem integrierten Sammlertrockner für die Anlagen mit unterschiedlichen Abmessungen verwendet werden kann. Auf diese Weise kann der Flachrohrkondensator mit dem integrierten Sammlertrockner in einer Großserie kostengünstig hergestellt und die Gesamtkosten der jeweiligen Anlage reduziert werden.

Vorgesehen ist, dass das Gehäuse einen ebenen Gehäuseboden aufweist. Alternativ oder zusätzlich ist vorgesehen, dass das Gehäuse im Wesentlichen quaderförmig ausgestaltet ist, wobei der Gehäuseboden rechteckig ist und das Gehäuse zwei zueinander parallele Langseitenwände und zwei zueinander parallele Kurzseitenwände aufweist. Vorteilhafterweise kann sich die Betriebshorizontalebene parallel zu dem ebenen Gehäuseboden erstrecken und der Flachrohrkondensator unter dem Betriebswinkel zu dem Gehäuseboden angeordnet sein. Durch eine Schraubenverbindung kann der Flachrohrkondensator dann an der Kurzseitenwand oder an der Langseitenwand und an dem Gehäuseboden festgelegt sein.

Das Gehäuse der Anlage kann aus einem Metall - beispielsweise aus Aluminium oder aus einer Aluminiumlegierung - oder alternativ aus einem Kunststoff - beispielsweise aus expandiertem Polypropylen - bestehen. Ferner ist auch eine Kombination verschiedener Werkstoffe möglich. Um das Eigengewicht der Anlage zu reduzieren, kann das Gehäuse auch eine Leichtbaustruktur aufweisen.

Vorteilhafterweise ist vorgesehen, dass der Kühlmittelkreislauf einen Kühlmittelkühler aufweist, der mit dem Energiespeicher wärmeübertragend verbindbar ist. Die in dem Energiespeicher erzeugte Wärme kann in dem Kühlmittelkreislauf an das Kühlmittel abgegeben werden, das durch den Kühlmittelkühler strömt. In dem Kühlmittelkühler wird die in dem Kühlmittel gespeicherte Wärme an die Umgebung abgegeben und das Kühlmittel auf diese Weise gekühlt. Der Kühlmittelkühler kann beispielsweise ein Flachrohrwärmetauscher sein. Um den Kühlmittelkühler platzsparend in dem Gehäuse der Anlage anzuordnen, kann der Kühlmittelkühler an der Großfläche des Flachrohrkondensators anliegend und luftdurchströmbar angeordnet sein.

Ferner kann der Kältemittelverdampfer beispielsweise ein Stapelscheibenwärmetauscher sein, um das Eigengewicht der Anlage zu reduzieren und die Anlage kompakter auszugestalten. Der Kältemittelkompressor kann elektrisch angetrieben sein und ein Metallgehäuse, bevorzugt aus Aluminium, aufweisen.

Insgesamt kann die erfindungsgemäße Anlage kompakt aufgebaut und das Eigengewicht der Anlage vorteilhaft reduziert werden.

Die Erfindung betrifft auch ein Kraftfahrzeug, wobei erfindungsgemäß das Kraftfahrzeug eine oben beschriebene Anlage zur Temperierung eines Energiespeichers aufweist. Dabei ist die Anlage mit dem Energiespeicher wärmeübertragend verbunden, so dass der Energiespeicher die erzeugte Wärme an das Kühlmittel abgeben kann. Erfindungsgemäß weist eine luftdurchströmbare Großfläche eines Flachrohrkondensators und ein in dem Flachrohrkondensator festgelegte Sammlertrockner einen Betriebswinkel größer 5° und kleiner 90° zu einer Betriebshorizontalebene auf. Vorteilhafterweise kann die Betriebshorizontalebene der Anlage der Fahrzeug-X-Y-Ebene entsprechen und/oder parallel zu einer Dachfläche des Kraftfahrzeugs verlaufen. Die Anlage kann auf diese Weise kompakter aufgebaut werden und der Platzbedarf in dem Kraftfahrzeug reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch

Fig. 1 eine Seitenansicht einer erfindungsgemäßen Anlage;
Fig. 2 eine Ansicht der in Fig. 1 gezeigten Anlage von oben.

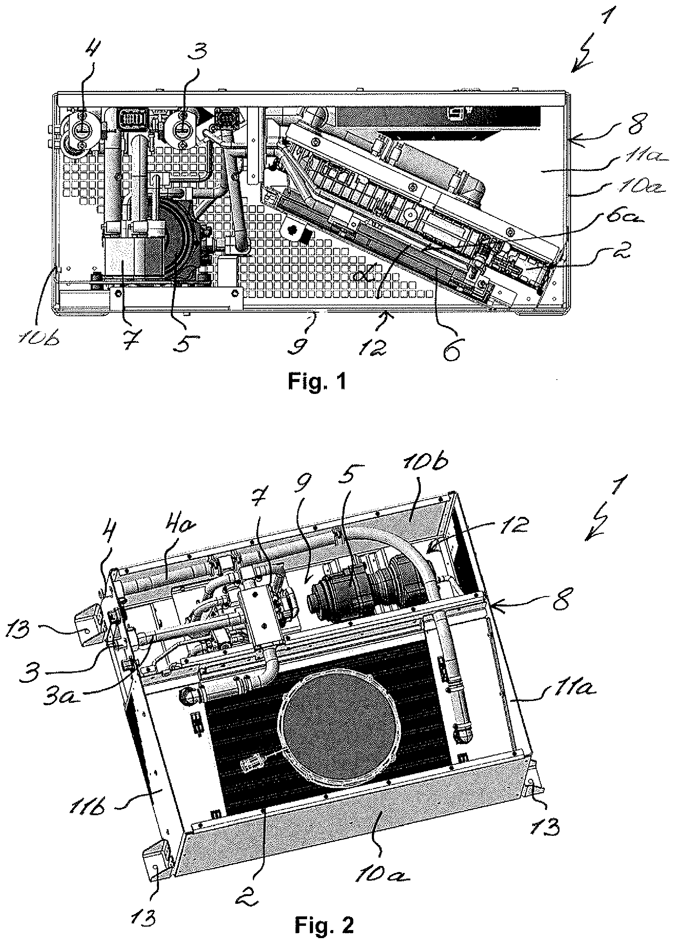

Fig. 1 zeigt eine Seitenansicht und Fig. 2 zeigt eine Ansicht einer erfindungsgemäßen Anlage 1 von oben. Dabei umfasst ein Kühlmittelkreislauf einen Kühlmittelkühler 2, der mit einem Energiespeicher - hier nicht gezeigt - durch einen Kühlmitteleinlass 3 und einen Kühlmittelauslass 4 wärmeübertragend verbindbar ist. Die in dem Energiespeicher erzeugte Wärme kann an ein Kühlmittel in dem Kühlmittelkreislauf abgegeben und der Energiespeicher auf diese Weise gekühlt werden. Der Kühlmitteleinlass 3 und der Kühlmittelauslass 4 sind mit dem Kühlmittelkühler 2 durch die Kühlmittelrohre 3a und 4a kühlmittelleitend verbunden. Ferner umfasst ein Kältemittelkreislauf einen Kältemittelkompressor 5 und einen Flachrohrkondensator 6 mit einem in dem Flachrohrkondensator 6 festgelegten Sammlertrockner - hier nicht gezeigt. In dem Kältemittelkreislauf kann dabei ein Kältemittel fließen. Der Kühlmittelkreislauf und der Kältemittelkreislauf sind durch einen Kältemittelverdampfer 7 miteinander verbindbar, wobei in dem Kältemittelverdampfer 7 die in dem Kühlmittel gespeicherte Wärme an das Kältemittel abgegeben werden kann. Die Anlage 1 ist in einem Gehäuse 8 festgelegt, das beispielsweise aus einem Metall oder aus einem Kunststoff besteht. Das Gehäuse 8 ist in diesem Ausführungsbeispiel quaderförmig ausgestaltet und weist einen ebenen rechteckigen Gehäuseboden 9, zwei zueinander parallele Langseitenwände 10a und 10b sowie zwei zueinander parallele Kurzseitenwände 11a und 11b auf.

Eine luftdurchströmbare Großfläche 6a des Flachrohrkondensators 6 und auch der in dem Flachrohrkondensator 6 festgelegte Sammlertrockner - hier nicht gezeigt - sind in dem Gehäuse 8 unter einem Betriebswinkel α zu einer Betriebshorizontalebene 12 angeordnet. Die Betriebshorizontalebene 12 ist in diesem Ausführungsbeispiel durch den ebenen Gehäuseboden 9 definiert, der beispielsweise an einer Dachfläche eines Kraftfahrzeugs durch Befestigungen 13 festgelegt werden kann. Der Betriebswinkel α kann zwischen größer 5° und kleiner 90° variieren, so dass die Anlage 1 je nach dem Betriebswinkel α unterschiedliche Abmessungen aufweisen kann. Auf diese Weise kann der Flachrohrkondensator 6 mit dem integrierten Sammlertrockner in einer Großserie kostengünstig hergestellt und in den Anlagen 1 mit unterschiedlichen Abmessungen verbaut werden. Die Gesamtkosten der jeweiligen Anlage 1 können auf diese Weise vorteilhaft reduziert werden.

Insgesamt kann die erfindungsgemäße Anlage 1 kompakt aufgebaut und das Eigengewicht der Anlage 1 vorteilhaft reduziert werden.

## Patentansprüche

1. Anlage (1) zur Temperierung eines Energiespeichers in einem Kraftfahrzeug,
- wobei der Energiespeicher in einen Kühlmittelkreislauf wärmeübertragend einbindbar ist,
- wobei ein Kältemittelkreislauf einen Kältemittelkompressor (5) und einen Flachrohrkondensator (6) mit einem in dem Flachrohrkondensator (6) festgelegten Sammlertrockner umfasst,
- wobei in dem Kühlmittelkreislauf ein Kühlmittel und in dem Kältemittelkreislauf ein Kältemittel fließen können,
- wobei der Kühlmittelkreislauf und der Kältemittelkreislauf durch einen Kältemittelverdampfer (7) miteinander verbindbar sind,
- wobei in dem Kältemittelverdampfer (7) die Wärme zwischen dem Kühlmittel und dem Kältemittel übertragbar ist, und
- wobei die Anlage (1) in einem Gehäuse (8) festgelegt ist,
**dadurch gekennzeichnet,**
**dass** eine luftdurchströmbare Großfläche (6a) des Flachrohrkondensators (6) und der in dem Flachrohrkondensator (6) festgelegte Sammlertrockner einen Betriebswinkel (a) größer 5° und kleiner 90° zu einer Betriebshorizontalebene (12) aufweisen, wobei der Betriebswinkel (a) so gewählt ist, dass Abmessungen der Anlage (1) auf gewünschte Werte angepasst sind und die Anlage (1) kompakter ausgestaltet ist.

2. Anlage nach Anspruch 1,
**dadurch gekennzeichnet,**
**dass** der in dem Flachrohrkondensator (6) festgelegte Sammlertrockner parallel zu der Großfläche (6a) des Flachrohrkondensators (6) angeordnet ist.

3. Anlage nach Anspruch 1 oder 2,
**dadurch gekennzeichnet,**
- **dass** das Gehäuse (8) einen ebenen Gehäuseboden (9) aufweist, oder
- **dass** das Gehäuse (8) im Wesentlichen quaderförmig ausgestaltet ist, wobei der Gehäuseboden (9) rechteckig ist und das Gehäuse (8) zwei zueinander parallele Langseitenwände (10a, 10b) und zwei zueinander parallele Kurzseitenwände (11a, 11b) aufweist.

4. Anlage nach Anspruch 3,
**dadurch gekennzeichnet,**
**dass** die Betriebshorizontalebene (12) sich parallel zu dem im Wesentlichen ebenen Gehäuseboden (9) erstreckt.

5. Anlage nach einem der vorangehenden Ansprüche,
**dadurch gekennzeichnet,**
**dass** der Kühlmittelkreislauf einen Kühlmittelkühler (2) aufweist, der mit dem Energiespeicher wärmeübertragend verbindbar ist.

6. Anlage nach Anspruch 5,
**dadurch gekennzeichnet,**
**dass** der Kühlmittelkühler (2) ein Flachrohrwärmetauscher ist.

7. Anlage nach Anspruch 6,
**dadurch gekennzeichnet,**
**dass** der Kühlmittelkühler (2) an der Großfläche (6a) des Flachrohrkondensators (6) anliegend und luftdurchströmbar angeordnet ist.

8. Anlage nach einem der vorangehenden Ansprüche,
**dadurch gekennzeichnet,**
**dass** der Kältemittelverdampfer (7) ein Stapelscheibenwärmetauscher ist.

9. Anlage nach einem der vorangehenden Ansprüche,
**dadurch gekennzeichnet,**
**dass** das Gehäuse (8) aus einem Metall, bevorzugt aus Aluminium oder aus einer Aluminiumlegierung, oder aus einem Kunststoff, bevorzugt aus expandiertem Polypropylen, besteht.

10. Anlage nach einem der vorangehenden Ansprüche,
**dadurch gekennzeichnet,**
**dass** der Kältemittelkompressor (5) elektrisch angetrieben ist und ein Metallgehäuse, bevorzugt aus Aluminium, aufweist.

11. Kraftfahrzeug mit einem Energiespeicher,
**dadurch gekennzeichnet,**
**dass** das Kraftfahrzeug eine Anlage (1) zur Temperierung des Energiespeichers nach einem der Ansprüche 1 bis 10 aufweist, die mit dem Energiespeicher wärmeübertragend verbunden ist.

12. Kraftfahrzeug nach Anspruch 11,
**dadurch gekennzeichnet,**
**dass** eine Betriebshorizontalebene (12) der Anlage (1) der Fahrzeug-X-Y-Ebene entspricht und/oder parallel zu einer Dachfläche des Kraftfahrzeugs verläuft.

## Revendications

1. Installation (1) pour la thermorégulation d'un accumulateur d'énergie dans un véhicule automobile,
- dans laquelle l'accumulateur d'énergie peut être intégré dans un circuit de refroidissement par échange de chaleur,
- dans laquelle un circuit de réfrigération comprend un compresseur de réfrigérant (5) et un condensateur à tube plat (6) avec un séchoir collecteur fixé dans le condensateur à tube plat (6),
- dans laquelle dans le circuit de refroidissement un fluide de refroidissement et dans le circuit de réfrigération un fluide de réfrigération peuvent s'écouler,
- dans laquelle le circuit de refroidissement et le circuit de réfrigération peuvent être reliés l'un à l'autre par un évaporateur de réfrigération (7),
- dans laquelle la chaleur entre le fluide de refroidissement et le fluide de réfrigération peut être transmise dans l'évaporateur de réfrigération (7), et
- dans laquelle l'installation (1) est fixée dans un boîtier (8),
**caractérisée en ce**
**qu'**une grande surface (6a) pouvant être traversée par l'air du condensateur à tube plat (6) et du séchoir collecteur fixé dans le condensateur à tube plat (6) présente un angle de fonctionnement (a) supérieur à 5° et inférieur à 90° par rapport à un plan horizontal de fonctionnement (12), dans laquelle l'angle de fonctionnement (a) est choisi de sorte que des dimensions de l'installation (1) soient adaptées aux valeurs souhaitées et l'installation (1) soit configurée de manière plus compacte.

2. Installation selon la revendication 1,
**caractérisée en ce**
**que** le séchoir collecteur fixé dans le condensateur à tube plat (6) est agencé parallèlement à la grande surface (6a) du condensateur à tube plat (6).

3. Installation selon la revendication 1 ou 2,
**caractérisée en ce**
- **que** le boîtier (8) présente un fond de boîtier (9) plan, ou
- **que** le boîtier (8) est configuré de manière sensiblement parallélépipédique, dans laquelle le fond de boîtier (9) est rectangulaire et le boîtier (8) présente deux parois latérales longitudinales (10a, 10b) parallèles l'une à l'autre et deux parois latérales courtes (11a, 11b) parallèles l'une à l'autre.

4. Installation selon la revendication 3,
**caractérisée en ce**
**que** le plan horizontal de fonctionnement (12) s'étend en parallèle du fond de boîtier (9) sensiblement plan.

5. Installation selon l'une quelconque des revendications précédentes,
**caractérisée en ce**
**que** le circuit de refroidissement présente un refroidisseur de refroidissement (2) qui peut être relié par échange de chaleur à l'accumulateur d'énergie.

6. Installation selon la revendication 5,
**caractérisée en ce**
**que** le refroidisseur de refroidissement (2) est un échangeur de chaleur à tube plat.

7. Installation selon la revendication 6,
**caractérisée en ce**
**que** le refroidisseur de refroidissement (2) est agencé reposant contre la grande surface (6a) du condensateur à tube plat (6) et pouvant être traversé par l'air.

8. Installation selon l'une quelconque des revendications précédentes,
**caractérisée en ce**
**que** l'évaporateur de réfrigération (7) est un échangeur de chaleur à plaques empilées.

9. Installation selon l'une quelconque des revendications précédentes,
**caractérisée en ce**
**que** le boîtier (8) consiste en un métal, de préférence un aluminium ou un alliage d'aluminium, ou une matière plastique, de préférence un polypropylène expansé.

10. Installation selon l'une quelconque des revendications précédentes,
**caractérisée en ce**
**que** le compresseur de réfrigération (5) est entraîné de manière électrique et présente un boîtier métallique, de préférence en aluminium.

11. Véhicule automobile avec un accumulateur d'énergie,
**caractérisé en ce**
**que** le véhicule automobile présente une installation (1) pour la thermorégulation de l'accumulateur d'énergie selon l'une quelconque des revendications 1 à 10 qui est reliée par échange de chaleur à l'accumulateur d'énergie.

12. Véhicule automobile selon la revendication 11,
**caractérisé en ce**
**qu'**un plan horizontal de fonctionnement (12) de l'installation (1) correspond au plan X-Y de véhicule et/ou s'étend parallèlement à une surface de toit du véhicule automobile.

## Claims

1. System (1) for controlling the temperature of an energy store in a motor vehicle,
- wherein the energy store can be incorporated in a heat-transferring manner into a coolant circuit,
- wherein a refrigerant circuit comprises a refrigerant compressor (5) and a flat tube condenser (6) having a receiver drier in the flat tube condenser (6),
- wherein in the coolant circuit a coolant is able to flow and in the refrigerant circuit a refrigerant is able to flow,
- wherein the coolant circuit and the refrigerant circuit can be connected to one another by a refrigerant evaporator (7),
- wherein in the refrigerant evaporator (7) the heat can be transferred between the coolant and the refrigerant, and
- wherein the system (1) is fixed in a housing (8),
**characterised in**
**that** a large surface (6a) of the flat tube condenser (6) which can be flowed through by air and the receiver drier fixed in the flat tube condenser (6) have an operating angle (a) which is greater than 5° and less than 90° to an operational horizontal plane (12), wherein the operating angle (a) is selected such that dimensions of the system (1) are adapted to desired values and the system (1) is compacter in design.

2. System according to claim 1,
**characterised in**
**that** the receiver drier fixed in the flat tube condenser (6) is arranged parallel to the large surface (6a) of the flat tube condenser (6).

3. System according to claim 1 or 2,
**characterised in**
- **that** the housing (8) has a flat housing base (9), or
- **that** the housing (8) is substantially cuboidal in form, wherein the housing base (9) is rectangular and the housing (8) has two long side walls (10a, 10b) which are parallel to one another and two short side walls (11a, 11b) which are parallel to one another.

4. System according to claim 3,
**characterised in**
**that** the operational horizontal plane (12) extends parallel to the substantially flat housing base (9).

5. System according to any of the preceding claims,
**characterised in**
**that** the coolant circuit has a coolant cooler (2) which can be connected in a heat-transferring manner to the energy store.

6. System according to claim 5,
**characterised in**
**that** the coolant cooler (2) is a flat tube heat exchanger.

7. System according to claim 6,
**characterised in**
**that** the coolant cooler (2) is arranged resting on the large surface (6a) of the flat tube condenser (6) and so as to be able to be flowed through with air.

8. System according to any of the preceding claims,
**characterised in**
**that** the coolant evaporater (7) is a stacked disc heat exchanger.

9. System according to any of the preceding claims,
**characterised in**
**that** the housing (8) consists of a metal, preferably aluminium or an aluminium alloy, or of a plastic, preferably expanded polypropylene.

10. System according to any of the preceding claims,
**characterised in**
**that** the refrigerant compressor (5) is electrically driven and has a metal housing, preferably of aluminium.

11. Motor vehicle having an energy store,
**characterised in**
**that** the motor vehicle has a system (1) for controlling the temperature of the energy store according to any of claims 1 to 10, which is connected in a heat-transferring manner to the energy store.

12. System according to claim 11,
**characterised in**
**that** an operational horizontal plane (12) of the system (1) corresponds to the vehicle X-Y plane and/or extends parallel to a roof surface of the motor vehicle.
